# EUROPÄISCHE PATENTSCHRIFT

(11) **EP 1 778 060 B1**
(45) Veröffentlichungstag und Bekanntmachung des Hinweises auf die Patenterteilung: **04.05.2011**
(21) Anmeldenummer: 06707947.5
(22) Anmeldetag: 01.02.2006
(51) Int. Cl.: A47J 31/057

(54) **VORRICHTUNG UND VERFAHREN ZUM HERSTELLEN EINES GETRÄNKES**
DEVICE AND METHOD FOR MAKING A BEVERAGE
DISPOSITIF ET PROCEDE POUR PRODUIRE UNE BOISSON

(30) Priorität: 11.02.2005 DE 102005006353
(43) Veröffentlichungstag der Anmeldung: 02.05.2007
(73) Patentinhaber: BSH Bosch und Siemens Hausgeräte GmbH, 81739 München (DE)
(72) Erfinder: HEIER, Mark, 85665 Moosach bei Grafing (DE); JÄGER, Harald, 83349 Palling-Freutsmoos (DE); STIEF, Peter, 83329 Waging am See (DE)
(86) Internationale Anmeldenummer: PCT/EP2006/050583
(87) Internationale Veröffentlichungsnummer: WO 2006/084810

(56) Entgegenhaltungen:
- EP-A- 1 008 322
- DE-U- 7 532 514
- DE-U1- 29 718 161

## Beschreibung

Die Erfindung betrifft eine Vorrichtung zum Herstellen eines Getränkes.

Eine solche Vorrichtung ist z.B. eine Haushaltskaffeemaschine, wie sie u.a. aus der EP 0 663 803 B1 oder der EP 1 008 322 B1 bekannt ist. Eine solche Kaffeemaschine umfasst ein Gehäuse, einen im oder am Gehäuse angeordneten Wasserbehälter, eine Heizvorrichtung zum Erhitzen des im Wasserbehälter befindlichen Wassers, eine Steigleitung, die mit einem Überlauf der Kaffeemaschine verbunden ist und das erhitzte Wasser zu dem Überlauf leitet, und eine Filtervorrichtung als Getränkezubereitungseinrichtung, in der sich während des Brühvorgangs eine für den Brühvorgang vorgesehene Menge Kaffeemehl befindet. Während des Brühvorgangs tropft das erhitzte Wasser in die Filtervorrichtung, nimmt Kaffeearoma des Kaffeemehls auf und wird anschließend als Kaffee von einem unterhalb der Filtervorrichtung angeordneten, auf einer Haltevorrichtung stehenden Getränkesammelbehälter aufgefangen. Am Ende des Brühvorgangs kann der Getränkesammelbehälter von der Haltevorrichtung genommen werden, um den Kaffee z.B. in Tassen zu portionieren. Da jedoch der Getränkesammelbehälter während des Brühvorgangs zwischen der Haltevorrichtung und der Filtervorrichtung angeordnet ist, kann das Entfernen des Getränkesammelbehälters von der Haltevorrichtung relativ umständlich sein, da in der Regel der Deckel des Getränkesammelbehälters direkt am Filterauslauf der Filtervorrichtung ansteht.

Die Aufgabe der Erfindung ist es daher, eine Vorrichtung zum Herstellen eines Getränkes derart auszuführen, dass der Getränkesammelbehälter nach dem Ende der Getränkezubereitung leichter von der Haltevorrichtung der Vorrichtung entnommen werden kann, und dass sichergestellt ist, dass sich der Getränkesammelbehälter während des Zubereitens nicht aus seiner für das Aufsammeln des Getränkes vorgesehene Stellung relativ zum Gehäuse entfernt.

Die Aufgabe der Erfindung wird gelöst durch eine Vorrichtung zum Herstellen eines Getränkes gemäß Patentanspruch 1.

Während des Zubereitens des Getränkes ist die Haltevorrichtung für den Getränkesammelbehälter in einer ersten Stellung relativ zum Gehäuse derart angeordnet, dass das zubereitete Getränk, das z.B. Wasser und wenigstens einen Zusatzstoff umfasst, von dem Getränkesammelbehälter aufgesammelt werden kann. Handelt es sich bei dem zubereiteten Getränk um ein Brühgetränk und insbesondere um Kaffee, dann wird das Getränk in einer Filterkammer als Getränkezubereitungseinrichtung zubereitet, indem das erhitzte Wasser das Aroma des Brühfiltrats aufnimmt und die Haltevorrichtung für den Getränkesammelbehälter ist in der ersten Stellung relativ zum Gehäuse derart angeordnet, dass das das Aroma aufgenommene erhitzte Wasser, also das Brühgetränk, von dem Getränkesammelbehälter aufgesammelt werden kann. Handelt es sich bei der Vorrichtung zum Herstellen eines Brühgetränkes um eine Haushaltskaffeemaschine, so ist der Getränkesammelbehälter für diese erste Stellung in der Regel direkt unterhalb der Filtervorrichtung angeordnet.

Ist das Getränk fertig zubereitet, indem z.B. der Brühvorgang beendet und das Brühgetränk mit dem Getränkesammelbehälter aufgesammelt ist, so kann die Haltevorrichtung mit dem Getränkesammelbehälter relativ zum Gehäuse wegbewegt und insbesondere gedreht werden. Dadurch befindet sich der Getränkesammelbehälter nicht mehr unterhalb der Filtervorrichtung und kann daher leichter entnommen werden. In dieser zweiten Stellung relativ zum Gehäuse ist die Haltevorrichtung versetzt zur Filtervorrichtung angeordnet.

Wenn nach einer Variante der erfindungsgemäßen Vorrichtung die Haltevorrichtung mittels einer Lagerbuchse oder einem Wälzlager, insbesondere einem Kugellager, schwenkbar gelagert ist, verringert sich die zum Drehen notwendige Kraft. Dies ist daher vorteilhaft, da an der Lagerbuchse bzw. am Wälzlager im Wesentlichen die gesamte Gewichtskraft der Haltevorrichtung und des Getränkesammelbehälters wirkt, was zu einer relativ großen Reibungskraft führen kann.

Erfindungsgemäß ist die Haltevorrichtung mittels einer Verriegelungsvorrichtung in ihrer ersten Stellung relativ zum Gehäuse verriegelbar, so ist sicher gestellt, dass sich der Getränkesammelbehälter während des Zubereitens nicht aus seiner für das Aufsammeln des Getränkes vorgesehene Stellung relativ zum Gehäuse entfernt.

Gemäß bevorzugter Varianten der erfindungsgemäßen Vorrichtung ist die Verriegelungsvorrichtung mechanisch oder elektrisch entriegelbar. Die mechanische Entriegelung funktioniert auch ohne Spannungsversorgung, d.h. auch dann, wenn die erfindungsgemäße Vorrichtung ausgeschaltet ist. Dadurch kann eine Benutzerin bzw. ein Benutzer der Vorrichtung den Getränkesammelbehälter praktisch jederzeit zur Entnahme, z.B. um den Getränkesammelbehälter zu reinigen, ausschwenken. Für die Zubereitung muss die Haltevorrichtung manuell in ihre für die Zubereitung vorgesehene Stellung relativ zum Gehäuse zurück gedreht werden. Die Verriegelungsvorrichtung kann z.B. mittels eines Hebels entriegelt werden, der beispielsweise eine für die Verriegelung vorgesehen Ruhelage aufweist. Für die Entriegelung kann dieser Hebel z.B. kurzzeitig in seine Löselage gebracht werden, in der die Haltevorrichtung in ihre für die Entnahme des Getränkesammelbehälter vorgesehene Stellung relativ zum Gehäuse gedreht werden kann. Nach dem Lösen der Verriegelung kehrt der Hebel bevorzugt wieder in seine Ruheposition zurück, damit die Haltevorrichtung wieder verriegelt wird, wenn sie in ihre für die Zubereitung vorgesehen Stellung gebracht wird. Der Hebel kann dazu insbesondere mit einer Feder verbunden sein, die den Hebel in seine Ruheposition zwingt. Des Weiteren kann der Hebel über einen Taster z.B. mechanisch oder elektrisch betätigt werden. Wird der Hebel elektrisch betätigt, so kann z.B. ein elektromechanisches Stellglied, das beispielsweise einen so genannten Memorydraht umfasst, verwendet werden. Der Memorydraht verformt sich mechanisch, wenn an ihm eine elektrische Spannung angelegt wird, und betätigt dadurch den Hebel. Nach Abschalten der Spannung kühlt der Memeorydraht ab und kehrt in seine Ursprungsform zurück, wodurch der Hebel wieder in seine Ruhelage zurückkehrt. Weitere Verriegelungseinrichtungen können einen Magneten, insbesondere einen Hubmagneten oder einen bestromten Permanentmagneten umfassen.

Gemäß einer weiteren Variante der erfindungsgemäßen Vorrichtung entriegelt sich die Verriegelungsvorrichtung nach Beendigung der Zubereitung automatisch.

Nach einer weiteren Ausführungsform umfasst die erfindungsgemäße Vorrichtung ein Rückstellelement, das die Haltevorrichtung, wenn die Verriegelungsvorrichtung entriegelt ist, in ihre zweite Stellung zwingt. In Kombination mit der automatischen Entriegelung nach Ende des Brühvorgangs dreht sich daher die Haltevorrichtung und somit der mit dem Brühgetränk befüllte Getränkesammelbehälter automatisch relativ zum Gehäuse. Dadurch kann der Getränkesammelbehälter nicht nur relativ leicht entnommen werden, sondern es wird auch angezeigt, dass das Brühgetränk fertig ist.

Das Rückstellelement kann dann besonders preisgünstig ausgeführt werden, wenn es gemäß einer Variante der erfindungsgemäßen Vorrichtung ein an dem Gehäuse angeordnetes Federelement, das die Haltevorrichtung durch ihre Federkraft in die zweite Stellung zwingt, umfasst. Die Kundin bzw. der Kunde schwenkt die Haltevorrichtung in ihre für den Brühvorgang vorgesehene Stellung manuell. Dazu muss diese bzw. dieser die Haltevorrichtung bis zur Verriegelung die Federkraft überdrücken.

Um insbesondere den automatischen Drehvorgang am Brühende zu dämpfen, umfasst die erfindungsgemäße Vorrichtung nach einer weiteren Variante eine Dämpfungsvorrichtung, wie z.B. einen Rotationsdämpfer.

Nach einer weiteren Variante der erfindungsgemäßen Vorrichtung ist die Haltevorrichtung mittels eines elektrischen Antriebs von ihrer ersten Stellung in ihre zweite Stellung und/oder von ihrer zweiten Stellung in ihre erste Stellung relativ zum Gehäuse schwenkbar. Der elektrische Antrieb schwenkt dabei bevorzugt nach Beendigung des Brühvorgangs die Haltevorrichtung automatisch von ihrer ersten Stellung in ihre zweite Stellung relativ zum Gehäuse.

Nach einer weiteren bevorzugten Ausführungsform der erfindungsgemäßen Vorrichtung umfasst diese Mittel zum Erkennen, ob sich die Haltevorrichtung in ihrer ersten Stellung befindet. Dadurch ist es möglich, dass die erfindungsgemäße Vorrichtung gemäß einer bevorzugten Variante derart ausgestaltet ist, dass der Brühvorgang nur gestartet wird, wenn sich die Haltevorrichtung in ihrer ersten Stellung relativ zum Gehäuse befindet und/oder automatisch stoppt, wenn sich die Haltevorrichtung während des Brühvorgangs aus ihrer ersten Stellung relativ zum Gehäuse löst. Die Mittel zum Erkennen, ob sich die Haltevorrichtung in ihrer ersten Stellung befindet, können beispielsweise ein Lagerschalter sein.

Nach einer weitern Ausführungsform der erfindungsgemäßen Vorrichtung verdeckt die Haltevorrichtung in ihrer zweiten Stellung Bedienelemente der Vorrichtung. Dadurch wird ein versehentliches Starten der Vorrichtung verhindert.

Gemäß bevorzugter Ausführungsformen der erfindungsgemäßen Vorrichtung umfasst das Gehäuse eine Säule, an der Komponenten des Gehäuses angeordnet und/oder die Haltevorrichtung für den Getränkesammelbehälter schwenkbar gelagert sind. Bevorzugt ist die Säule vertikal an einem Sockel befestigt. Handelt es sich bei der Vorrichtung um eine Vorrichtung zum Herstellen eine Brühgetränkes, wie z.B. Tee oder Kaffee, dann handelt es sich bei diesen Komponenten z.B. eine Filtervorrichtung zur Aufnahme eines Brühfiltergutes unterhalb der sich bevorzugt die Haltevorrichtung in ihrer ersten Stellung relativ zum Gehäuse befindet. Ist nach einer Variante der erfindungsgemäßen Vorrichtung die Haltevorrichtung für den Getränkesammelbehälter beabstandet von dem Sockel an der Säuleschwenkbar gelagert, kann die Schwenkbewegung der Haltevorrichtung besonders ästhetisch realisiert werden.

Vorteilhafte Ausführungsformen ergeben sich aus den abhängigen Ansprüchen.

Ein Ausführungsbeispiel einer erfindungsgemäßen Vorrichtungen zum Herstellen eines Brühgetränkes in Form von Kaffeemaschine ist exemplarisch in den nachfolgenden schematischen Figuren dargestellt. Es zeigen:
- Figuren 1 und 2: dreidimensionale Ansicht einer Kaffeemaschine und
- Figur 3: einen Teilausschnitt der in den Figuren 1 und 2 dargestellten Kaffeemaschine.

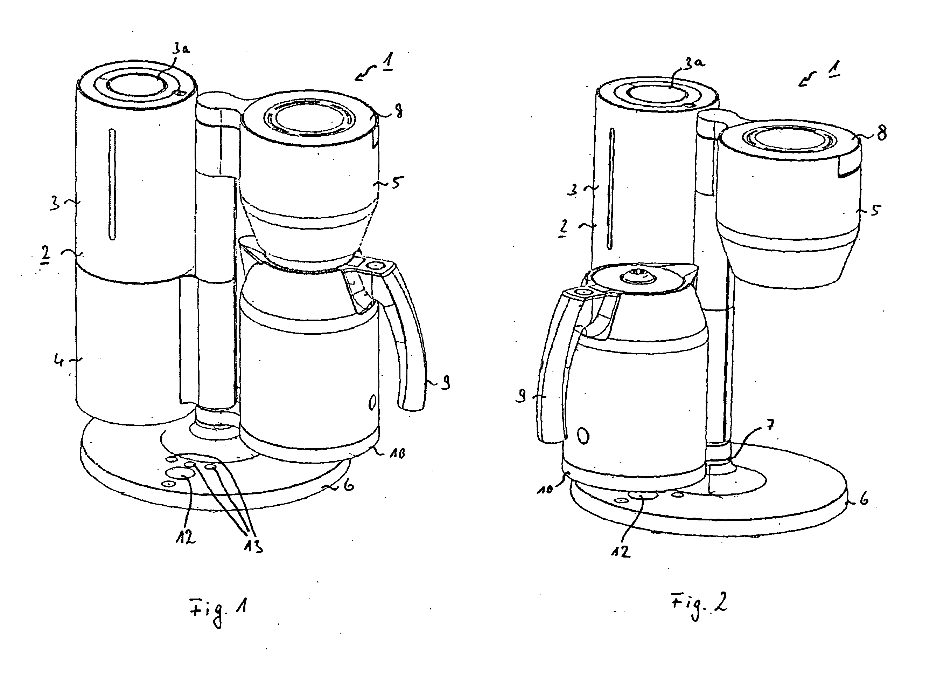

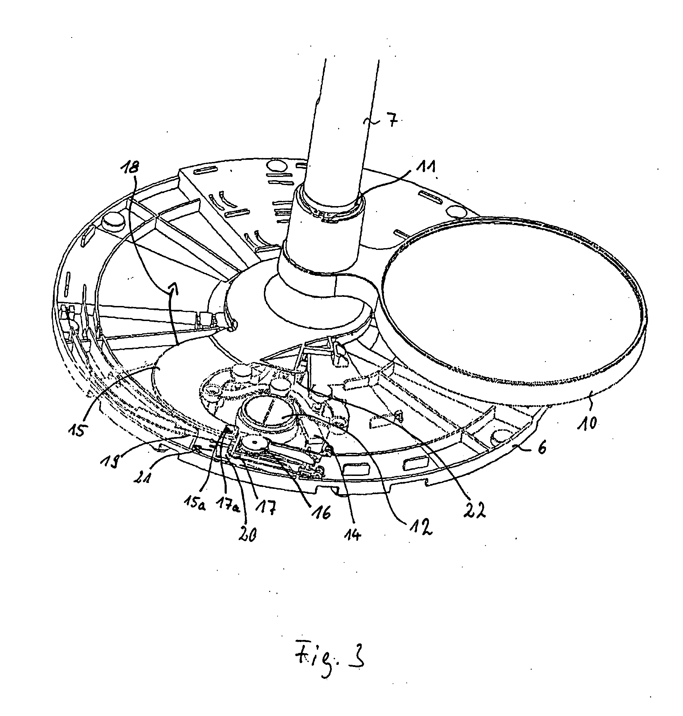

Die Figuren 1 und 2 zeigen dreidimensionale Ansichten einer erfindungsgemäßen Brühgetränkemaschine in Form einer Kaffeemaschine 1 mit einem Gehäuse 2. Das Gehäuse 2 der Kaffeemaschine 1 umfasst im Falle des vorliegenden Ausführungsbeispiels einen Wasservorratsbehälter 3, einen unterhalb des Wasservorratsbehälters 3 angeordneten Gehäuseteil 4, eine Brühkammer 5, einen Sockel 6 und eine Säule 7. Die Säule 7, die in der Fig. 3 teilweise dargestellt ist, ist mit dem Sockel 6 verbunden und an der Säule 7 sind der Wasservorratsbehälter 3, das Gehäuseteil 4 und die Brühkammer 5 befestigt.

Der Wasservorratsbehälter 3 kann über einen Deckel 3a des Wasservorratsbehälters 3 mit Wasser gefüllt werden und die Brühkammer 5 umfasst einen allgemein bekannten und daher nicht näher gezeigten Filterträger, in dem zum Brühen von Kaffee eine geeignete Filtertüte mit Kaffeemehl gelegt werden kann.

Der Wasservorratsbehälter 3 ist mit einem in den Figuren nicht dargestellten und im Gehäuseteil 4 angeordneten Durchlauferhitzer verbunden. Während des Brühvorgangs der Kaffeemaschine 1 läuft Wasser von dem Wasservorratsbehälter 3 durch den Durchlauferhitzer, wird dort erhitzt und mittels einer nicht dargestellten Steigleitung von dem Durchlauferhitzer zu einem oberhalb der Brühkammer 5 angeordneten Überlauf 8 geleitet. Von dem Überlauf 8 tropft das erhitzte Wasser in die Brühkammer 5, nimmt Kaffeearoma von dem in der Brühkammer 5 befindlichen Kaffeemehl auf und tropft durch eine nicht näher dargestellte Öffnung im unteren Teil der Brühkammer 5 als Kaffee in eine während des Brühvorgangs unterhalb der Brühkammer 5 angeordneten Getränkesammelbehälter, wie es in der Fig. 1 dargestellt ist. Im Falle des vorliegenden Ausführungsbeispiels ist der Getränkesammelbehälter eine Thermoskanne 9, die auf einer schwenkbar an der Säule 7 befestigten Haltevorrichtung 10 steht.

Wie es in der Fig. 3 näher dargestellt ist, ist die Haltevorrichtung 10 im Falle des vorliegenden Ausführungsbeispiels mittels zweier Lagerbuchsen, von denen nur eine Lagerbuchse 11 in der Fig. 3 zu sehen ist, schwenkbar an der Säule 7 befestigt. Aufgrund der schwenkbaren Befestigung kann die Haltevorrichtung 10 von einer ersten Position relativ zum Gehäuse 2 in eine zweite Position relativ zum Gehäuse 2 geschwenkt werden. Die erste Position ist dafür vorgesehen, dass sich die Thermoskanne 9, wenn sie auf der Haltevorrichtung 10 steht, unterhalb der Brühkammer 5 befindet, wie es in der Fig. 1 gezeigt ist. Die erste Position ist insbesondere für den Brühvorgang des Kaffees bestimmt. Befindet sich die Haltevorrichtung 10 in ihrer zweiten Position, dann befindet sich die auf der Haltevorrichtung 10 stehende Thermoskanne 9 seitlich versetzt zur Brühkammer 5 und kann somit relativ leicht von der Haltevorrichtung 10 entnommen werden. Die zweite Position ist in der Fig. 2 gezeigt.

Für die Bedienung der Kaffeemaschine 1 sind im Falle des vorliegenden Ausführungsbeispiels am Sockel 6 Bedienelemente angeordnet, die im Falle des vorliegenden Ausführungsbeispiels eine Ein-/Ausschalttaste 12 und drei Tasten 13 zum Einstellen der Stärke des zu brühenden Kaffees umfassen.

Innerhalb des Sockels 6 befindet sich im Falle des vorliegenden Ausführungsbeispiels die Steuerungselektronik 14 zum Steuern des Brühvorgangs der Kaffeemaschine 1. Die Steuerungselektronik 14 steuert während des Brühvorgangs im Wesentlichen den Durchlauferhitzer und ist mit diesem mit in den Figuren nicht dargestellten elektrischen Leitungen verbunden.

An der Säule 7 ist im Falle des vorliegenden Ausführungsbeispiels ein in der Fig. 3 dargestellter Mitnehmer 15, der innerhalb dem Sockel 6 angeordnet und mit der Haltevorrichtung 10 für die Thermoskanne 9 gekoppelt ist, drehbar angeordnet. Im Falle des vorliegenden Ausführungsbeispiels ist der Mitnehmer 15 mit einer von dem Mitnehmer 15 verdeckten Drehfeder, die wiederum mit dem Sockel 6 verbunden ist, gekoppelt. Befindet sich die Haltevorrichtung 10 in ihrer für den Brühvorgang vorgesehen ersten Position, so ist die Drehfeder derart vorgespannt, so dass sie die Haltevorrichtung 10 über den Mitnehmer 15 in ihre zur Entnahme der Thermoskanne 9 von der Haltevorrichtung 10 bestimmten zweiten Position zwingt. Damit die Haltevorrichtung 10 in ihrer ersten Position bleibt, ist der Mitnehmer 15 im Falle des vorliegenden Ausführungsbeispiels mittels eines Hebels 17 verriegelbar. Der Hebel 17 umfasst einen Vorsprung 17a, der in eine dem Vorsprung 17a angepasste Öffnung 15a des Mitnehmers 15 einhakt. Außerdem wird der Hebel 17 mit einer Feder derart nach oben gedrückt, so dass der Vorsprung 17a in die Öffnung 15a gedrückt wird.

Im Falle des vorliegenden Ausführungsbeispiels ist ferner im Sockel 6 eine mit dem Hebel 17 gekoppelte Taste 16 angeordnet, mit der der Mitnehmer 15 manuell entriegelt werden kann. Wird die Taste 16 gedrückt, so wird der Hebel 17 mit nach unten gedrückt und entriegelt den Mitnehmer 15. Die vorgespannte Drehfeder zieht daraufhin den Mitnehmer 15 in die Richtung des Pfeils 18. Da die Haltevorrichtung 10 wiederum mit dem Mitnehmer 15 gekoppelt ist, schwenkt die Haltevorrichtung 10 von ihrer ersten Position in ihre zweite Position. Im Falle des vorliegenden Ausführungsbeispiels wird die Schwenkbewegung der Haltevorrichtung 10 mittels eines am Sockel 6 angeordneten und mit dem Mitnehmer 15 zusammenwirkenden Rotationsdämpfer gedämpft, der in der Fig. 3 gezeigten Darstellung vom Mitnehmer 15 verdeckt ist.

Im Falle des vorliegenden Ausführungsbeispiels umfasst die Kaffeemaschine 1 noch einen so genannter Memory-Draht 19, der mit seinem einem Ende an dem Sockel 6 und mit seinem anderen Ende an einem in dem Sockel 6 angeordneten Schieber 20 befestigt ist. Der Memory-Draht 19 ist mit einer in der Fig. 3 der Übersicht halber nicht dargestellten elektrischen Leitung verbunden, mit der der Memory-Draht 19 mit einem elektrischen Strom beaufschlagt werden kann. Ist der Brühvorgang zum Brühen von Kaffee beendet, so schaltet der Durchlauferhitzer ab und die Steuerelektronik 14 veranlasst, dass der Memory-Draht 19 über die elektrische Leitung mit dem elektrischen Strom beaufschlagt wird. Dadurch wird der Memory-Draht 19 erwärmt, zieht sich zusammen und zieht den Schieber 20 in Richtung des Pfeils 21. Der Schieber 20 ist wiederum mit dem Hebel 17 derart gekoppelt, dass der Hebel 17 nach unten gedrückt wird, wenn der Schieber 20 in Richtung des Pfeils 21 gezogen wird. Dadurch wird der Mitnehmer 15 entriegelt und die Haltevorrichtung 10 von ihrer ersten Position in ihre zweite Position bewegt. Wenn sich die Haltevorrichtung 10 in ihrer zweiten Position befindet, wird die elektrische Stromzufuhr für den Memory-Draht 19 abgeschaltet, wodurch sich der Memory-Draht 19 wieder abkühlt und verlängert. Eine vorgespannte, in der Fig. 3 der Übersicht halber nicht gezeigte Feder, die mit einem Ende an dem Sockel 6 und ihrem anderen Ende am Schieber 20 befestigt ist, kann dann den Schieber 20 in die entgegengesetzte Richtung des Pfeils 21 ziehen, wodurch die Haltevorrichtung 10, wenn manuell in ihre erste Position gebracht, wieder verriegelt werden kann.

Die Kaffeemaschine 1 umfasst im Falle des vorliegenden Ausführungsbeispiels noch einen Schalter 22, der von dem Mitnehmer 15 geschlossen wird, wenn sich die Haltevorrichtung 10 in ihrer ersten Position befindet, und geöffnet ist, wenn sich die Haltevorrichtung 10 in ihrer zweiten Position befindet. Ist der Schalter 22 geöffnet, so kann die Kaffeemaschine 1 nicht eingeschaltet werden bzw. schaltet automatisch aus.

Im Falle der in den Figuren 1 bis 3 gezeigten Kaffeemaschine 1 wird die Haltevorrichtung 10 mittels des Mitnehmers 15 und der vorgespannten Drehfeder von ihrer ersten in ihre zweite Position geschwenkt. Die Haltevorrichtung 10 kann jedoch insbesondere auch mit einem elektrischen Antrieb gekoppelt sein, der die Haltevorrichtung 10 von ihrer ersten in ihre zweite Position und eventuell auch von ihrer zweiten in ihre erste Position schwenkt.

## Patentansprüche

1. Vorrichtung zum Herstellen eines Getränkes, aufweisend ein Gehäuse (2), eine Getränkezubereitungseinrichtung (5) und eine Haltevorrichtung (10) für einen Getränkesammelbehälter (9), der während der Zubereitung des Getränkes das Getränk aufnimmt, wobei die Haltevorrichtung (10) für den Getränkesammelbehälter (9) relativ zum Gehäuse (2) schwenkbar gelagert ist, **dadurch gekennzeichnet, dass** die Haltevorrichtung (10) aus einer für die Zubereitung des Getränkes vorgesehenen ersten Stellung relativ zum Gehäuse (2) schwenkbar ist, in der der Getränkesammelbehälter (9), wenn bestimmungsgemäß an der Haltevorrichtung (10) angeordnet, unterhalb der Getränkezubereitungseinrichtung (5) angeordnet ist, und die Haltevorrichtung (10) in eine für die Entnahme des Getränkesammelbehälters (9) aus der Haltevorrichtung (10) vorgesehenen zweiten Stellung relativ zum Gehäuse (2) schwenkbar ist, in der der Getränkesammelbehälter (9), wenn bestimmungsgemäß an der Haltevorrichtung (10) angeordnet, versetzt zur Getränkezubereitungseinrichtung (5) angeordnet ist, und dass die Haltevorrichtung (10) mittels einer Verriegelungsvorrichtung (15, 16, 17) in ihrer ersten Stellung relativ zum Gehäuse (2) verriegelbar ist.

2. Vorrichtung nach Anspruch 1, **dadurch gekennzeichnet**, das die Haltevorrichtung (10) mittels einer Lagerbuchse (11) oder einem Wälzlager schwenkbar gelagert ist.

3. Vorrichtung nach Anspruch 2, **dadurch gekennzeichnet, dass** die Verriegelungsvorrichtung (15, 16, 17) mechanisch oder/oder elektrisch entriegelbar ist.

4. Vorrichtung nach Anspruch 2 oder 3, **dadurch gekennzeichnet, dass** sich die Verriegelungsvorrichtung (15, 16, 17) nach Beendigung der Getränkezubereitung automatisch entriegelt.

5. Vorrichtung nach einem der Ansprüche 2 bis 4, **dadurch gekennzeichnet, dass** die Vorrichtung (1) ein Rückstellelement umfasst, das die Haltevorrichtung (10), wenn die Verriegelungsvorrichtung (15, 16, 17) entriegelt ist, automatisch in ihre zweite Stellung bewegt.

6. Vorrichtung nach Anspruch 5, **dadurch gekennzeichnet, dass** das Rückstellelement ein an dem Gehäuse (2) angeordnetes Federelement umfasst, das die Haltevorrichtung (10) durch ihre Federkraft in die zweite Stellung zwingt.

7. Vorrichtung nach Anspruch 5 oder 6, **dadurch gekennzeichnet, dass** die Vorrichtung (2) eine Dämpfungsvorrichtung umfasst, die derart ausgeführt ist, dass sich die Haltevorrichtung (10) von ihrer ersten Stellung in ihre zweite Stellung relativ zum Gehäuse (2) gedämpft bewegt.

8. Vorrichtung nach Anspruch 7, **dadurch gekennzeichnet, dass** die Dämpfungsvorrichtung ein Rotationsdämpfer ist.

9. Vorrichtung nach einem der Anspruch 1 oder 2, **dadurch gekennzeichnet, dass** die Vorrichtung (1) einen elektrischen Antrieb umfasst, der die Haltevorrichtung (10) von ihrer ersten Stellung in ihre zweite Stellung und/oder von ihrer zweiten Stellung in ihre erste Stellung relativ zum Gehäuse (2) bewegt.

10. Vorrichtung nach Anspruch 9, **dadurch gekennzeichnet, dass** der elektrische Antrieb nach Beendigung der Getränkezubereitung die Haltevorrichtung (10) automatisch von ihrer ersten Stellung in ihre zweite Stellung relativ zum Gehäuse (2) bewegt.

11. Vorrichtung nach einem der Ansprüche 1 bis 10, **dadurch gekennzeichnet, dass** die Vorrichtung Mittel (22) zum Erkennen, ob sich die Haltevorrichtung (10) in ihrer ersten Stellung befindet, umfasst.

12. Vorrichtung nach Anspruch 11, **dadurch gekennzeichnet, dass** die Vorrichtung (1) derart ausgestaltet ist, dass die Getränkezubereitung nur gestartet wird, wenn sich die Haltevorrichtung (10) in ihrer ersten Stellung relativ zum Gehäuse (2) befindet und/oder automatisch stoppt, wenn sich die Haltevorrichtung (10) während der Getränkezubereitung aus ihrer ersten Stellung relativ zum Gehäuse (2) löst.

13. Vorrichtung nach einem der Ansprüche 1 bis 12, **dadurch gekennzeichnet, dass** die Haltevorrichtung (10) in ihrer zweiten Stellung Bedienelemente (12, 13) der Vorrichtung (1) verdeckt.

14. Vorrichtung nach einem der Ansprüche 1 bis 13, **dadurch gekennzeichnet, dass** das Gehäuse (2) eine Säule (7) umfasst, an der Komponenten des Gehäuses (4, 5) angeordnet und/oder die Haltevorrichtung (10) für den Getränkesammelbehälter (9) schwenkbar gelagert sind.

15. Vorrichtung nach Anspruch 14, **dadurch gekennzeichnet, dass** das Gehäuse (2) einen Sockel (6) umfasst, auf dem auf dem die Säule (7) vertikal angeordnet ist.

16. Vorrichtung nach Anspruch 15, **dadurch gekennzeichnet, dass** die Haltevorrichtung (10) für den Getränkesammelbehälter (9) beabstandet von dem Sockel (6) an der Säule (7) schwenkbar gelagert ist.

17. Vorrichtung nach einem der Ansprüche 1 bis 13, **dadurch gekennzeichnet, dass** das Getränk ein Brühgetränk und die Getränkezubereitungsvorrichtung (5) eine am oder im Gehäuse (2) angeordnete Filtervorrichtung (5) zur Aufnahme eines Brühfiltergutes ist.

18. Vorrichtung nach Anspruch 17, **dadurch gekennzeichnet, dass** an der Säule die Filtervorrichtung (5) befestigt ist und sich die Haltevorrichtung (10) in ihrer ersten Stellung relativ zum Gehäuse (2) unterhalb der Filtervorrichtung (5) befindet.

19. Vorrichtung nach Anspruch 17 oder 18, die eine Kaffeemaschine (1) ist.

## Claims

1. Device for making a beverage, comprising a housing (2), beverage preparation equipment (5) and a holding device (10) for a beverage collecting container (9), which receives the beverage during preparation of the beverage, wherein the holding device (10) for the beverage collecting container (9) is mounted to be pivotable relative to the housing (2), **characterised in that** the holding device (10) is pivotable from a first setting, which is provided for preparation of the beverage, relative to the housing (2), in which the beverage collecting container (9) when arranged in accordance with intention at the holding device (10) is disposed below the beverage preparation device (5), and the holding device (10) into a second setting, which is provided for removal of the beverage collecting container (9) from the housing device (10), relative to the housing (2), in which the beverage collecting container (9) when arranged according to intention at the holding device (10) is disposed offset relative to the beverage preparation device (5), and that the holding device (10) is lockable in its first setting relative to the housing (2) by means of a locking device (15, 16, 17).

2. Device according to claim 1, **characterised in that** the holding device (10) is pivotably mounted by means of a bearing bush (11) or a roller bearing.

3. Device according to claim 2, **characterised in that** the locking device (15, 16, 17) is unlockable mechanically and/or electrically.

4. Device according to claim 2 or 3, **characterised in that** the locking device (15, 16, 17) is automatically unlocked after conclusion of the beverage preparation.

5. Device according to any one of claims 2 to 4, **characterised in that** the device (1) comprises a resetting element which automatically moves the holding device (10) into its second setting when the locking device (15, 16, 17) is unlocked.

6. Device according to claim 5, **characterised in that** the resetting element comprises a spring element which is arranged at the housing (2) and which by its spring force constrains the holding device (10) into the second setting.

7. Device according to claim 5 or 6, **characterised in that** the device (2) comprises a damping device which is so constructed that the movement of the holding device (10) from its first setting to its second setting relative to the housing (2) is damped.

8. Device according to claim 7, **characterised in that** the damping device is a rotation damper.

9. Device according to one of claims 1 and 2, **characterised in that** the device (1) comprises an electrical drive which moves the holding device (10) from its first setting to its second setting and/or from its second setting to its first setting relative to the housing (2).

10. Device according to claim 9, **characterised in that** the electrical drive after conclusion of the beverage preparation automatically moves the holding device (10) from its first setting to its second setting relative to the housing (2).

11. Device according to any one of claims 1 to 10, **characterised in that** the device comprises means (22) for recognising whether the holding device (10) is disposed in its first setting.

12. Device according to claim 11, **characterised in that** the device (1) is designed in such a manner that the beverage preparation is started only when the holding device (10) is disposed in its first setting relative to the housing (2) and/or is automatically stopped when the holding device (10) during the beverage preparation detaches from its first setting relative to the housing (2).

13. Device according to any one of claims 1 to 12, **characterised in that** the holding device (10) in its second setting covers control elements (12, 13) of the device (1).

14. Device according to any one of claims 1 to 13, **characterised in that** the housing (2) comprises a column (7) at which components of the housing (4, 5) are arranged and/or the holding device (10) for the beverage collecting container (9) is pivotably mounted.

15. Device according to claim 14, **characterised in that** the housing (2) comprises a base (6) on which the column (7) is vertically arranged.

16. Device according to claim 15, **characterised in that** the holding device (10) for the beverage collecting container (9) is pivotably mounted on the column (7) at a spacing from the base (6).

17. Device according to any one of claims 1 to 13, **characterised in that** the beverage is a brewed beverage and the beverage preparation device (5) is a filter device (5), which is arranged at or in the housing (2), for receiving a brewed filtered stock.

18. Device according to claim 17, **characterised in that** the filter device (5) is fastened to the column and the holding device (10) in its first setting relative to the housing (2) is disposed below the filter device (5).

19. Device according to claim 17 or 18, which is a coffee machine (1).

## Revendications

1. Dispositif destiné à la réalisation d'une boisson, présentant un boîtier (2), un dispositif de préparation de boisson (5) et un dispositif de maintien (10) pour un récipient collecteur de boisson (9) qui réceptionne la boisson pendant la préparation de la boisson, le dispositif de maintien (10) pour le récipient collecteur de boisson (9) étant logé de manière pivotante par rapport au boîtier (2), **caractérisé en ce que** le dispositif de maintien (10) est pivotant de manière relative au boîtier (2) à partir d'une première position prévue pour la préparation d'une boisson, dans laquelle position le récipient collecteur de boisson (9), lorsqu'il est disposé sur le dispositif de maintien (10) de manière conforme à l'emploi, est disposé en dessous du dispositif de préparation de boisson (5), et **en ce que** le dispositif de maintien (10) est pivotant de manière relative au boîtier (2) dans une seconde position prévue pour le retrait du récipient collecteur de boisson (9) hors du dispositif de maintien (10), dans laquelle position le récipient collecteur de boisson (9), lorsqu'il est disposé sur le dispositif de maintien (10) de manière conforme à l'emploi, est disposé de manière décalée par rapport au dispositif de préparation de boisson (5), et **en ce que** le dispositif de maintien (10) est blocable dans sa première position relative au boîtier (2) au moyen d'un dispositif de blocage (14, 16, 17).

2. Dispositif selon la revendication 1, **caractérisé en ce que** le dispositif de maintien (10) est logé de manière pivotante au moyen d'une douille de palier (11) ou d'un palier à roulement.

3. Dispositif selon la revendication 2, **caractérisé en ce que** le dispositif de blocage (15, 16, 17) est déblocable mécaniquement et/ou électriquement.

4. Dispositif selon la revendication 2 ou 3, **caractérisé en ce que** le dispositif de blocage (15, 16, 17) se débloque automatiquement après l'achèvement de la préparation de la boisson.

5. Dispositif selon l'une quelconque des revendications 2 à 4, **caractérisé en ce que** le dispositif (1) comprend un élément de rappel qui déplace le dispositif de maintien (10) automatiquement dans sa deuxième position, lorsque le dispositif de blocage (15, 16, 17) est débloqué.

6. Dispositif selon la revendication 5, **caractérisé en ce que** l'élément de rappel comprend un élément à ressort disposé sur le boîtier (2), lequel élément à ressort contraint le dispositif de maintien (10) dans la seconde position en raison de sa résilience.

7. Dispositif selon la revendication 5 ou 6, **caractérisé en ce que** le dispositif (1) comprend un dispositif d'amortissement qui est réalisé de manière à ce que le dispositif de maintien (10) se déplace de manière amortie de sa première position dans sa seconde position relative au boîtier (2).

8. Dispositif selon la revendication 7, **caractérisé en ce que** le dispositif d'amortissement est un amortisseur à rotation.

9. Dispositif selon l'une quelconque des revendications 1 ou 2, **caractérisé en ce que** le dispositif (1) comprend un entraînement électrique qui déplace le dispositif de maintien (10) de sa première position dans sa seconde position et/ou de sa seconde position dans sa première position relative au boîtier (2).

10. Dispositif selon la revendication 9, **caractérisé en ce que** l'entraînement électrique, après l'achèvement de la préparation de la boisson, déplace le dispositif de maintien (10) automatiquement de sa première position dans sa seconde position relative au boîtier (2).

11. Dispositif selon l'une quelconque des revendications 1 à 10, **caractérisé en ce que** le dispositif comprend des moyens (22) destinés à identifier si le dispositif de maintien (10) se trouve dans sa première position.

12. Dispositif selon la revendication 11, **caractérisé en ce que** le dispositif (1) est réalisé de manière à ce que la préparation de la boisson ne soit démarrée que si le dispositif de maintien (10) se trouve dans sa première position relative au boîtier (2) et/ou que s'il s'arrête automatiquement lorsque le dispositif de maintien (10), pendant la préparation de la boisson, se désenclenche de sa première position relative au boîtier (2).

13. Dispositif selon l'une quelconque des revendications 1 à 12, **caractérisé en ce que** le dispositif de maintien (10), dans sa seconde position, recouvre des éléments de commande (12, 13) du dispositif (1).

14. Dispositif selon l'une quelconque des revendications 1 à 13, **caractérisé en ce que** le boîtier (2) comprend une colonne (7) sur laquelle sont disposés des composants du boîtier (4, 5) et/ou sur laquelle le dispositif de maintien (10), pour le récipient collecteur de boisson (9), est logé de manière pivotante.

15. Dispositif selon la revendication 14, **caractérisé en ce que** le boîtier (2) comprend un socle (6) sur lequel la colonne (7) est disposée verticalement.

16. Dispositif selon la revendication 15, **caractérisé en ce que** le dispositif de maintien (10) pour le récipient collecteur de boisson (9) est logé de manière pivotante sur la colonne (7) à distance du socle (6).

17. Dispositif selon l'une quelconque des revendications 1 à 13, **caractérisé en ce que** la boisson est une boisson infusée et **en ce que** le dispositif de préparation de boisson (5) est un dispositif de filtrage (5) disposé sur ou dans le boîtier (2) pour réceptionner un produit à infuser par filtrage.

18. Dispositif selon la revendication 17, **caractérisé en ce que** le dispositif de filtrage (5) est fixé sur la colonne et **en ce que** le dispositif de maintien (10) se trouve dans sa première position relative au boîtier (2) en dessous du dispositif de filtrage (5).

19. Dispositif selon la revendication 17 ou 18, lequel est une machine à café (1).
